(19) **Europäisches Patentamt**

**European Patent Office**

**Office européen des brevets**

(11) **EP 1 260 968 B1**

(12) **EUROPEAN PATENT SPECIFICATION**

(45) Date of publication and mention
of the grant of the patent:
**30.03.2005 Bulletin 2005/13**

(51) Int Cl.7: **G10L 15/02**, G10L 17/00,
G10L 15/14

(21) Application number: **02010724.9**

(22) Date of filing: **14.05.2002**

(54) **Method and system for recognizing, indexing, and searching acoustic signals**

Verfahren und System zum Erkennen, Indizieren und Suchen von akustischen Signalen

Méthode et système pour reconnaître, indexer et chercher des signaux acoustiques

| | |
|---|---|
| (84) Designated Contracting States:<br>**DE FR GB** | (56) References cited:<br>**US-B1- 6 321 200** |
| (30) Priority: **21.05.2001 US 861808** | • **CASEY M: "MPEG-7 SOUND-RECOGNITION TOOLS" IEEE TRANSACTIONS ON CIRCUITS AND SYSTEMS FOR VIDEO TECHNOLOGY, IEEE INC. NEW YORK, US, vol. 11, no. 6, June 2001 (2001-06), pages 737-747, XP001059866 ISSN: 1051-8215** |
| (43) Date of publication of application:<br>**27.11.2002 Bulletin 2002/48** | • **TONG ZHANG ET AL: "Hierarchical classification of audio data for archiving and retrieving" ACOUSTICS, SPEECH, AND SIGNAL PROCESSING, 1999. PROCEEDINGS., 1999 IEEE INTERNATIONAL CONFERENCE ON PHOENIX, AZ, USA 15-19 MARCH 1999, PISCATAWAY, NJ, USA,IEEE, US, 15 March 1999 (1999-03-15), pages 3001-3004, XP002901108 ISBN: 0-7803-5041-3** |
| (73) Proprietor: **MITSUBISHI DENKI KABUSHIKI KAISHA**<br>**Tokyo 100-8310 (JP)** | |
| (72) Inventor: **Casey, Michael A.**<br>**Cambridge, MA 02138 (US)** | |
| (74) Representative: **Pfenning, Meinig & Partner GbR**<br>**Mozartstrasse 17**<br>**80336 München (DE)** | • **ISO/IEC: "INFORMATION TECHNOLOGY - MULTIMEDIA CONTENT DESCRIPTION INTERFACE - PART 4: AUDIO" ISO/IEC CD 15938-4, 14 March 2001 (2001-03-14), SINGAPORE** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**FIELD OF THE INVENTION**

The invention relates generally to the field of acoustic signal processing, and in particular to recognizing, indexing and searching acoustic signals.

**BACKGROUND OF THE INVENTION**

To date, very little work has been done on characterizing environmental and ambient sounds. Most prior art acoustic signal representation methods have focused on human speech and music. However, there are no good representation methods for many sound effects heard in films, television, video games, and virtual environments, such footsteps, traffic, doors slamming, laser guns, hammering, smashing, thunder claps, leaves rustling, water spilling, etc. These environmental acoustic signals are generally much harder to characterize than speech and music because they often comprise multiple noisy and textured components, as well as higher-order structural components such as iterations and scattering.

One particular application that could use such a representation scheme is video processing. Methods are available for extracting, compressing, searching, and classifying video objects, see for example the various MPEG standards. No such methods exist for "audio" objects, other than when the audio objects are speech. For example, it maybe desired to search through a video library to locate all video segments where John Wayne is galloping on a horse while firing his six-shooter. Certainly it is possible to visually identify John Wayne or a horse. But it much more difficult to pick out the rhythmic clippidy-clop of a galloping horse, and the staccato percussion of a revolver. Recognition of audio events can delineate action in video.

Another application that could use the representation is sound synthesis. It is not until the features of a sound are identified before it becomes possible to synthetically generate a sound, other than be trial and error.

In the prior art, representations for non-speech sounds have usually focused on particular classes of non-speech sound, for example, simulating and identifying specific musical instruments, distinguishing submarine sounds from ambient sea sounds and recognition of underwater mammals by their utterances. Each of these applications requires a particular arrangement of acoustic features that do not generalize beyond the specific application.

In addition to these specific applications, other work has focused on developing generalized acoustic scene analysis representations. This research has become known as "computational auditory scene analysis." These systems require a lot of computational effort due to their algorithmic complexity. Typically, they use heuristic schemes from Artificial Intelligence as well as various inference schemes.

Whilst such systems provide valuable insight into the difficult problem of acoustic representations, the performance of such systems has never been demonstrated to be satisfactory with respect to classification and synthesis of acoustic signals in a mixture.

In yet another application, sound representations could be used to index audio media including a wide range of sound phenomena including environmental sounds, background noises, sound effects (Foley sounds), animal sounds, speech, non-speech utterances and music. This would allow one to design sound recognition tools for searching audio media using automatically extracted indexes. Using these tools, rich sound tracks, such as films or news programs, could be searched by semantic descriptions of content or by similarity to a target audio query. For example, it is desired to locate all film clips where lions roar, or elephants trumpet.

There are many possible approaches to automatic classification and indexing. Wold et al.," IEEE Multimedia, pp.27-36, 1996, Martin et al., *"Musical instrument identification: a pattern-recognition approach,"* Presented at the 136th Meeting of the Acoustical Society of America, Norfolk, VA, 1998, describe classification strictly for musical instruments. Zhang et al., *"Content-based classification and retrieval of audio,"* SPIE 43$^{rd}$ Annual Meeting, Conference on Advanced Signal Processing Algorithms, Architectures and Implementations VIII, 1998, describes a system that trains models with spectrogram data, and Boreczky et al., *"A hidden Markov model framework for video segmentation using audio and image features,"* Proceedings of ICASSP'98, pp.3741-3744, 1998 uses Markov models.

Indexing and searching audio media is particularly germane to the newly emerging MPEG-7 standard for multimedia. The standard needs a unified interface for general sound classes. Encoder compatibility is a factor in the design. Then, a "sound" database with indexes provided by one implementation could be compared with those extracted by a different implementation.

Also known from prior art (Tong Zhang and C.-C. Jay Kuo: "Hierarchical Classification of Audio Data for Archiving and Retrieving", Integrated Media Systems Center and Department of Electrical Engineering-Systems, University of Southern California, Los Angeles, IEEE 1999) is a hierarchical system for audio classification and retrieval based on audio content analysis. The system consists of three stages. The first stage is a coarse-level audio classification and segmentation. The second stage classifies further environmental sounds into finer classes. In the third stage a query-by example audio retrieval is implemented.

Beyond this, US 6,321,200 describes a method, which extracts features from a mixture of signals. In this method a mixture of signals is filtered by a filter bank to produce a plurality of band-pass signals. Each band-pass signal is windowed to produce a plurality of multi-dimensional observation matrices. The matrices are reduced in their dimensionality and features are extracted.

## SUMMARY OF THE INVENTION

The invention is defined in claim 1.

A computerized method extracts features from an acoustic signal generated from one or more sources.

The acoustic signals are first windowed and filtered to produce a spectral envelope for each source. The dimensionality of the spectral envelope is then reduced to produce a set of features for the acoustic signal. The features in the set are clustered to produce a group of features for each of the sources. The features in each group include spectral features and corresponding temporal features characterizing each source.

Each group of features is a quantitative descriptor that is also associated with a qualitative descriptor. Hidden Markov models are trained with sets of known features and stored in a database. The database can then be indexed by sets of unknown features to select or recognize like acoustic signals.

## BRIEF DESCRIPTION OF THE DRAWINGS

Figure 1 is a flow diagram of a method for extracting features from a mixture of signals according to the invention;

Figure 2 is a block diagram of the filtering and windowing steps;

Figure 3 is a block diagram of normalizing, reducing , and extracting steps;

Figures 4 and 5 are graphs of features of a metallic shaker;

Figure 6 is a block diagram of a description model for dogs barking;

Figure 7 is a block diagram of a description model for pet sounds;

Figure 8 is a spectrogram reconstructed from four spectral basis functions and basis projections;

Figure 9a is a basis projection envelope for laughter;

Figure 9b is an audio spectrum for the laughter of Figure 9

Figure 10a is a log scale spectrogram for laughter;

Figure 10b is a reconstructed spectrogram for laughter;

Figure 11a is a log spectrogram for dog barking;

Figure 11b is a sound model state path sequence of states through a continuous hidden Markov model for the dog barking of Figure 11a;

Figure 12 is a block diagram of a sound recognition classifier;

Figure 13 is a block diagram of a system for extracting sounds according to the invention;

Figure 14 is a block diagram of a process for training a hidden Markov model according to the invention;

Figure 15 is a block diagram of a system for identifying and classifying sounds according to the invention;

Figure 16 is a graph of a performance of the system of Figure 15;

Figure 17 is a block diagram of a sound query system according to the invention;

Figure 18a is a block diagram of a state path of laugher;

Figure 18b is a state path histograms of laughter;

Figure 19a are state paths of matching laughters; and

Figure 19b are state path histograms of matching laughters.

## DETAILED DESCRIPTION OF THE PREFERRED EMBODIMENT

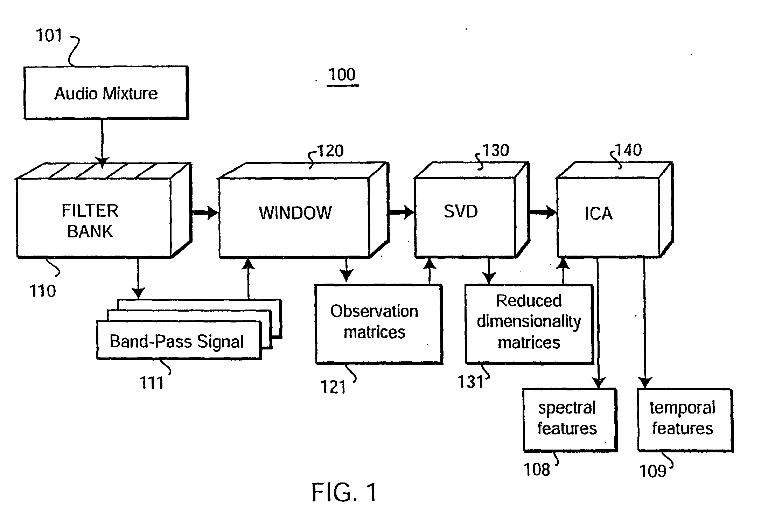

Figure 1 shows a method 100 for extracting spectral and temporal features 108-109 from a mixture of signals 101 according to my invention. My method 100 can be used for characterizing and extracting features from sound recordings for classification of the sound sources and for re-purposing in structured multi-media applications such as parametric synthesis. The method can also be used to extract features from other linear mixtures, or for that matter from multi-dimensional mixtures. The mixture can be obtained from a single source, or from multiple sources such as a stereo sound source.

In order to extract features from recorded signals, I use statistical techniques based on independent component analysis (ICA). Using a contrast function defined on cumulative expansions up to a fourth order, the ICA transform generates a rotation of the basis of the time-frequency observation matrices 121.

The resulting basis components are as statistically independent as possible and characterize the structure of the individual features, e.g., sounds, within the mixture source 101. These characteristic structures can be used to classify the signal, or to specify new signals with predictable features.

The representation according to my invention is capable of synthesizing multiple sound behaviors from a small set of features. It is able to synthesize complex acoustic event structures such as impacts, bounces, smashes and scraping as well as acoustic object properties such as materials, size and shape.

In the method 100, the audio mixture 101 is first processed by a bank of logarithmic filters 110. Each of the filters produces a band-pass signal 111 for a predetermined frequency range. Typically, forty to fifty band-pass signals 111 are produced with more signals at lower frequency ranges than higher frequency ranges to mimic the frequency response characteristics of the human ear. Alternatively, the filters can be a constant-Q (CQ) or wavelet filterbank, or they can be linearly spaced as in a short time fast Fourier transform representation (STFT).

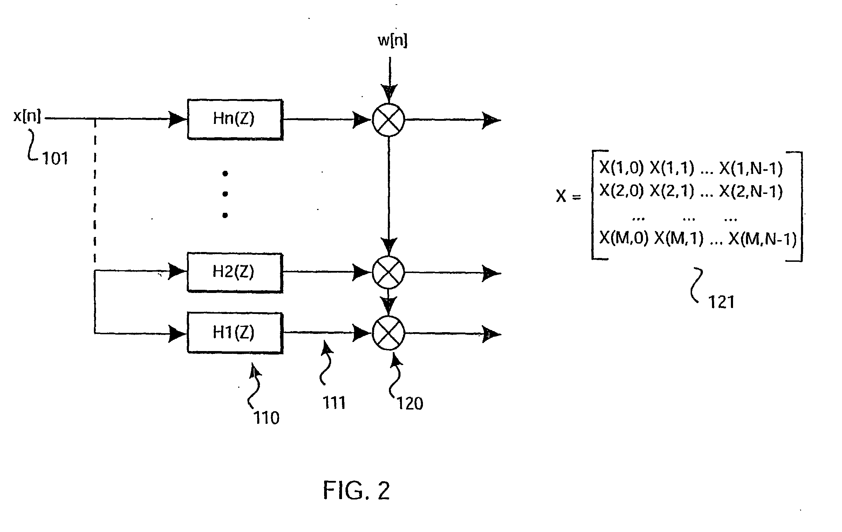

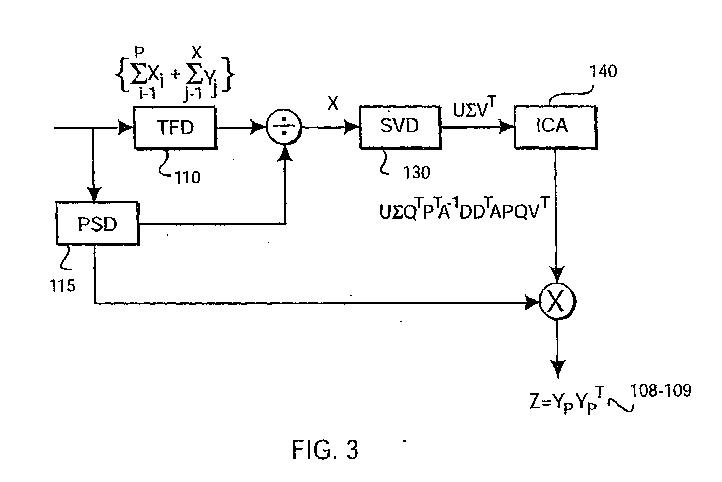

In step 120, each of the band-pass signals is "windowed" into short, for example, 20 millisecond segments to produce observation matrices. Each matrix can include hundreds of samples. The details of steps 110 and 120 are shown in greater detail in Figures 2 and 3. It should be noted that the windowing can be done before the filtering.

In step 130 a singular value decomposition (SVD) is applied to the observation matrices 121 to produce reduced dimensionality of the matrices 131. SVD were first described by the Italian geometer Beltrami in 1873. The singular value decomposition is a well-defined generalization of the principal component analysis (PCA). The singular value decomposition of an $m \times n$ matrix is any factorization of the form:

$$X = U \textstyle\sum V^T$$

where $U$ is an $m \times m$ orthogonal matrix; i.e. $U$ has orthonormal columns, $V$ is an $n \times n$ orthogonal matrix, and $\sum$ is an $m \times n$ diagonal matrix of singular values with components $\sigma_{ij} = 0$ if $i$ is not equal to $j$.

As an advantage and in contrast with PCA, the SVD can decomposes a non-square matrix, thus it is possible to directly decompose the observation matrices in either spectral or temporal orientation without the need for a calculating a covariance matrix. Because the SVD decomposes a non-square matrix directly, without the need for a covariance matrix, the resulting basis is not as susceptible to dynamic range problems as the PCA.

I apply an optional independent component analysis (ICA) in step 140 to the reduced dimensionality matrices 131. An ICA that uses an iterative on-line algorithm based on a neuro-mimetic architecture for blind signal separation is well known. Recently, many neural-network architectures have been proposed for solving the ICA problem, see for example, U.S. Patent No. 5,383,164 "Adaptive system for broadband multisignal discrimination in a channel with reverberation," issued to Sejnowski on January 17, 1995.

The ICA produces the spectral and temporal features 108-109. The spectral features, expressed as vectors, correspond to estimates of the statistically most independent component within a segmentation window. The temporal features, also expressed as vectors, described the evolution of the spectral components during the course of the segment.

Each pair of spectral and temporal vectors can be combined using a vector outer product to reconstruct a partial spectrum for the given input spectrum. If these spectra are invertable, as a filterbank representation would be, then the independent time-domain signals can be estimated. For each of the independent components described in the scheme, a matrix of compatibility scores for components in the prior segment is made available. This allows tracking of components through time by estimating the most likely successive correspondences. Identical to the backward compatibility matrix, only looking forward in time.

An independent components decomposition of an audio track can be used to estimate individual signal components within an audio track. Whilst the separation problem is intractable unless a full-rank signal matrix is available (N linear mixes of N sources), the use of independent components of short temporal sections of frequency-domain representations can give approximations to the underlying sources. These approximations can be used for classification and recognition tasks, as well as comparisons between sounds.

As shown in Figure 3, the time frequency distribution (TFD) can be normalized by the power spectral density (PSD) 115 to diminish the contribution of lower frequency components that carry more energy in some acoustic domains.

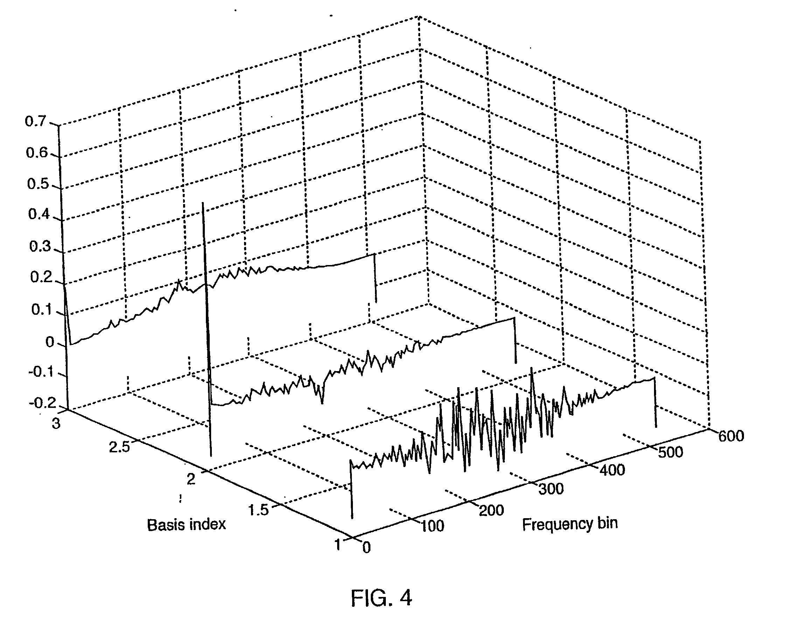

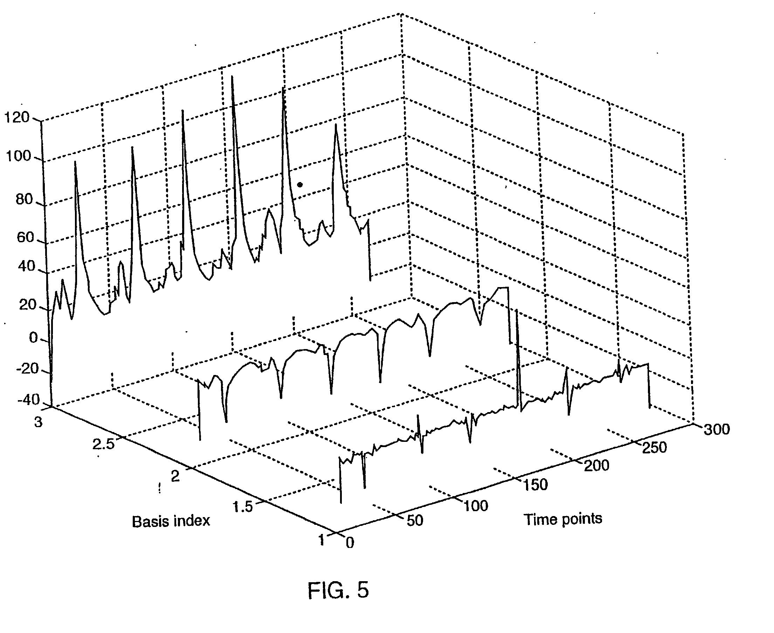

Figures 4 and 5 respectively show the temporal and spatial decomposition for a percussion shaker instrument played at a regular rhythm. The observable structures reveal wide-band articulate components corresponding to the shakes, and horizontal stratification corresponding to the ringing of the metal shell.

### Applications for Acoustic Features of Sounds

My invention can be used in a number of applications. The extracted features can be considered as separable components of an acoustic mixture representing the inherent structure within the source mixture. Extracted features can be compared against a set of a-priori classes, determined by pattern-recognition techniques, in order to recognize or identify the components. These classifiers can be in the domain of speech phonemes, sound effects, musical instruments, animal sounds or any other corpus-based analytic models. Extracted features can be re-synthesized independently using an inverse filter-bank thus achieving an "unmixing" of the source acoustic mixture. An example use separates the singer, drums and guitars from an acoustic recording in order to re-purpose some components or to automatically analyze the musical structure. Another example separates an actor's voice from background noise in order to pass the cleaned speech signal to a speech recognizer for automatic transcription of a movie.

The spectral features and temporal features can be considered separately in order to identify various properties of the acoustic structure of individual sound objects within a mixture. Spectral features can delineate such properties are materials, size, shape whereas temporal features can delineate behaviors such as bouncing, breaking and smashing. Thus a glass smashing can be distinguished from a glass bouncing, or a clay pot smashing. Extracted features can be altered and re-synthesized in order to produce modified synthetic instances of the source sound. If the input sound is a single sound event comprising a plurality of acoustic features, such as a glass smash, then the individual features can be controlled for re-synthesis. This is useful for model-based media applications such as generating sound in virtual environments.

### Indexing and Searching

My invention can also be used to index and search a large multimedia database including many different types of sounds, e.g., sound effects, animal sounds, musical instruments, voices, textures, environmental sounds, male sounds, female sounds.

In this context, sound descriptions are generally divided into two types: qualitative text-based description by category labels, and quantitative description using probabilistic model states. Category labels provide qualitative information about sound content. Descriptions in this form are suitable for text-based query applications, such as Internet search engines, or any processing tool that uses text fields.

In contrast, the quantitative descriptors include a compact information about an audio segment and can be used for numerical evaluation of sound similarity. For example, these descriptors can be used to identify specific instruments in a video or audio recording. The qualitative and quantitative descriptors are well suited to audio query-by-example search applications.

### Sound Recognition Descriptors and Description Schemes

### Qualitative Descriptors

While segmenting an audio recording into classes, it is desired to gain pertinent semantic information about the content. For example, recognizing a scream in a video soundtrack can indicate horror or danger, and laughter can indicate comedy. Furthermore, sounds can indicate the presence of a person and therefore the video segments to which these sounds belong can be candidates in a search for clips that contain people. Sound category and classification scheme descriptors provide a means for organizing category concepts into hierarchical structures that enable this type of complex relational search strategy.

**Sound Category**

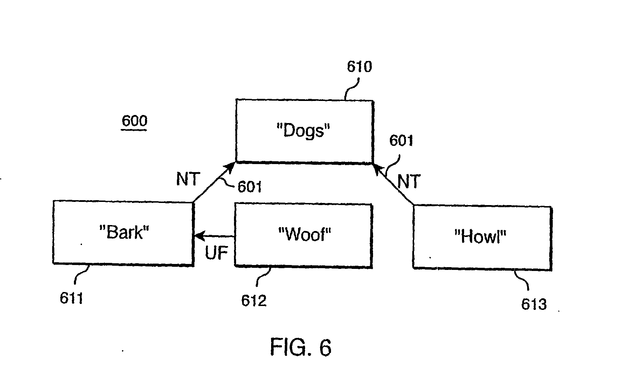

As shown in Figure 6 for a simple taxonomy 600, a description scheme (DS) is used for naming sound categories. As an example, the sound of a dog barking can be given the qualitative category label "Dogs" 610 with "Bark" 611 as a sub-category. In addition, "Woof" 612 or "Howl" 613 can be desirable sub-categories of "Dogs." The first two sub-categories are closely related, but the third is an entirely different sound event. Therefore, Figure 6 shows four categories are organized into a taxonomy with "Dogs" as the root node 610. Each category has at least one relation link 601 to another category in the taxonomy. By default, a contained category is considered a narrower category (NC) 601 than the containing category. However, in this example, "Woof' is defined as being a nearly synonymous with, but less preferable than, "Bark". To capture such structure, the following relations are defined as part of my description scheme.

BC - Broader category means the related category is more general in meaning than the containing category. NC - Narrower category means the related category is more specific in meaning than the containing category. US - Use the related category that is substantially synonymous with the current category because it is preferred to the current category. UF - Use of the current category is preferred to the use of the nearly synonymous related category. RC - The related category is not a synonym, quasi-synonym, broader or narrower category, but is associated with the containing category.

The following XML-schema code shows how to instantiate the qualitative description scheme for the category taxonomy shown in Figure 6 using a description definition language (DDL):

```
<SoundCategory term="1" scheme="DOGS">
   <Label>Dogs</Label>
   <TermRelation term="1.1" scheme="DOGS">
      <Label>Bark</Label>
      <TermRelation term="1.2" scheme="DOGS" type="US">
         <Label>Woof</Label>
      </TermRelation>
   </TermRelation>
   <TermRelation term="1.3" scheme="DOGS">
      <Label>Howl</Label>
   </TermRelation>
</SoundCategory>
```

The category and scheme attributes together provide unique identifiers that can be used for referencing categories and taxonomies from the quantitative description schemes, such as the probabilistic models described in greater detail below. The label descriptor gives a meaningful semantic label for each category and the relation descriptor describes relationships amongst categorys in the taxonomy according to the invention.

**Classification Scheme**

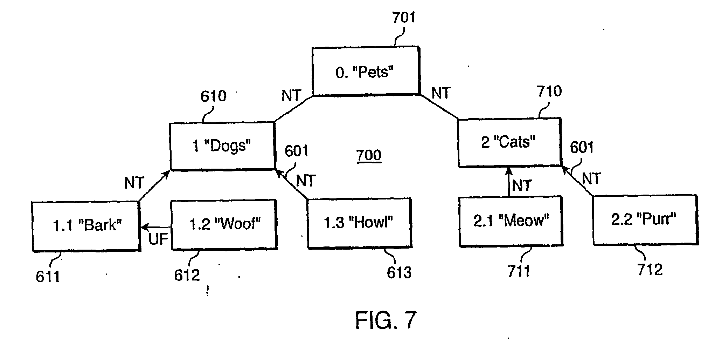

As shown in Figure 7, categories can be combined by the relational links into a classification scheme 700 to make a richer taxonomy; for example, "Barks" 611 is a sub-category of "Dogs" 610 which is a sub-category of "Pets" 701; as is the category "Cats" 710. Cats 710 has the sound categories "Meow" 711 and "purr" 712. The following is an example of a simple classification scheme for "Pets" containing two categories: "Dogs" and "Cats".

To implement this classification scheme by extending the previously defined scheme, a second scheme, named "CATS", is instantiated as follows:

```
<SoundCategory term="2" scheme="CATS">
   <Label>Cats</Label>
   <TermRelation term="2.1 scheme="CATS">
      <Label>Meow</Label>
   </TermRelation>
   <TermRelation term="2.2" scheme="CATS">
      <Label>Purr</Label>
   </TermRelation>
</SoundCategory>
```

Now to combine these categories, a ClassificationScheme, called "PETS", is instantiated that references the previously defined schemes:

```
<ClassificationScheme term="0" scheme="PETS">
   <Label>Pets</Label>
   <ClassificationSchemeRef scheme="DOGS"/>
   <ClassificationSchemeRef scheme="CATS"/>
</ClassificationScheme>
```

Now, the classifications scheme called "PETS" includes all of the category components of "DOGS" and "CATS" with the additional category "Pets" as the root. A qualitative taxonomy, as described above, is sufficient for text indexing applications.

The following sections describe quantitative descriptors for classification and indexing that can be used together with the qualitative descriptors to form a complete sound index and search engine.

**Quantitative Descriptors**

The sound recognition quantitative descriptors describe features of an audio signal to be used with statistical classifiers. The sound recognition quantitative descriptors can be used for general sound recognition including sound effects and musical instruments. In addition to the suggested descriptors, any other descriptor defined within the audio framework can be used for classification.

**Audio Spectrum Basis Features**

Among the most widely used features for sound classification are spectrum-based representations, such as power spectrum slices or frames. Typically, a each spectrum slice is an *n*-dimensional vector, with *n* being the number of spectral channels, with up to 1024 channels of data. A logarithmic frequency spectrum, as represented by an audio framework descriptor, helps to reduce the dimensionality to around 32 channels. Therefore, spectrum-derived features are generally incompatible with probability model classifiers due to their high dimensionality. Probability classifiers work best with fewer than 10 dimensions.

Therefore, I prefer the low dimensionality basis functions produced by the single value decomposition (SVD) as described above and below. Then, an audio spectrum basis descriptor is a container for the basis functions that are used to project the spectrum to the lower-dimensional sub-space suitable for probability model classifiers.

I determine a basis for each class of sound, and sub-classes. The basis captures statistically the most regular features of the sound feature space. Dimension reduction occurs by projection of spectrum vectors against a matrix of data-derived basis functions, as described above. The basis functions are stored in the columns of a matrix in which the number of rows corresponds to the length of the spectrum vector and the number of columns corresponds to the number of basis functions. Basis projection is the matrix product of the spectrum and the basis vectors.

**Spectrogram Reconstructed from Basis Functions**

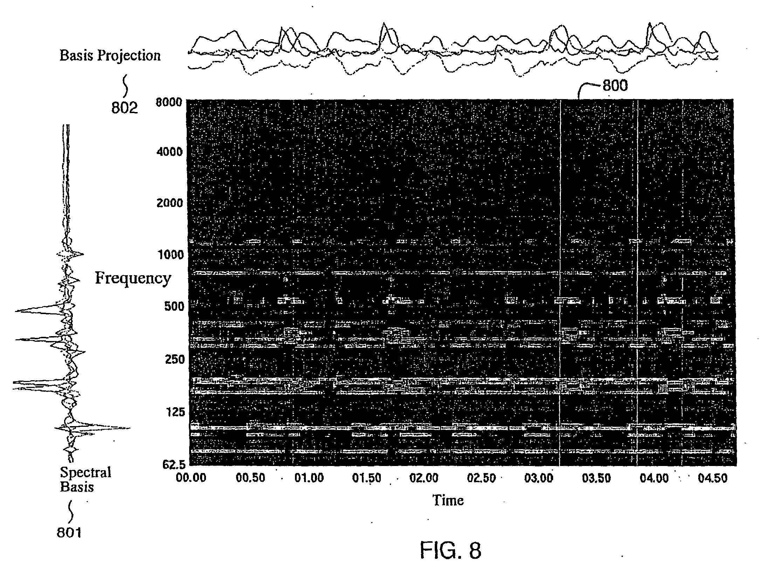

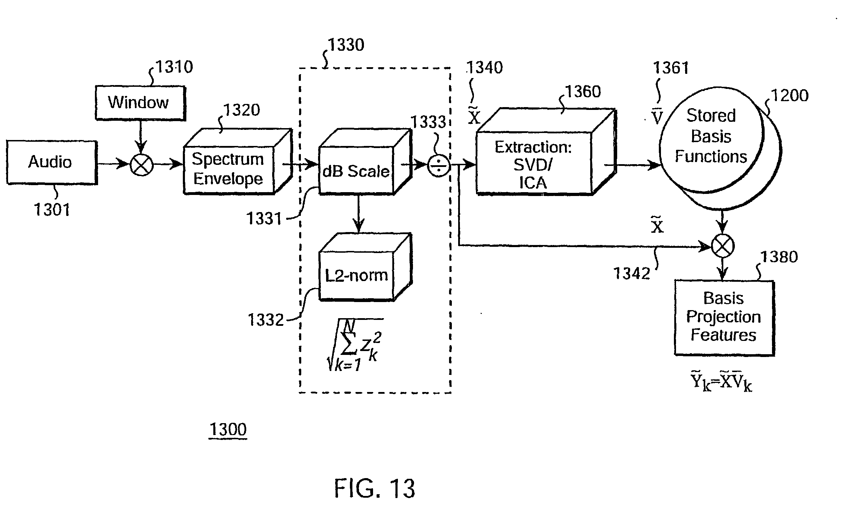

Figure 8 shows a spectrogram 800 reconstructed from four basis functions according to the invention. The specific spectrogram is for "pop" music. The spectral basis vectors 801 on the left are combined with the basis projection vectors 802, using the vector outer product. Each resulting matrix of the outer product is summed to produce the final reconstruction. Basis functions are chosen to maximize the information in fewer dimensions than the original data. For example, basis functions can correspond to uncorrelated features extracted using principal component analysis (PCA) or a Karhunen-Loeve transform (KLT), or statistically independent components extracted by independent component analysis (ICA). The KLT or Hotelling transform is the preferred decorrelating transform when the second order statistics, i.e., covariances are known. This reconstruction is described in greater detail with reference to Figure 13.

For classification purposes a basis is derived for an entire class. Thus, the classification space includes of the most statistically salient components of the class. The following DDL instantiation defines a basis projection matrix that reduces a series of 31-channel logarithmic frequency spectra to five dimensions.

```
<AudioSpectrumBasis loEdge="62.5" hiEdge="8000" resolution="1/4 octave">
    <Basis>
        <Matrix dim="31 5">
        0.26 -0.05  0.01 -0.70  0.44
        0.34  0.09  0.21 -0.42 -0.05
        0.33  0.15  0.24 -0.05 -0.39
        0.33  0.15  0.24 -0.05 -0.39
        0.27  0.13  0.16  0.24 -0.04
        0.27  0.13  0.16  0.24 -0.04
        0.23  0.13  0.09  0.27  0.24
        0.20  0.13  0.04  0.22  0.40
        0.17  0.11  0.01  0.14  0.37
        . . .
        </Matrix>
    </Basis>
</AudioSpectrumBasis>
```

The loEdge, hiEdge and resolution attributes give lower and upper frequency bounds of the basis functions. and the spacing of the spectral channels in octave-band notation. In the classification framework according to the invention, the basis functions for an entire class of sound are stored along with a probability model for the class.

**Sound Recognition Features**

Features used for sound recognition can be collected into a single description scheme that can be used for a variety of different applications. The default audio spectrum projection descriptors perform well in classification of many sound types, for example, sounds taken from sound effect libraries and musical instrument sample disks.

The base features are derived from an audio spectrum envelope extraction process as described above. The audio spectrum projection descriptor is a container for dimension-reduced features that are obtained by projection of a spectrum envelope against a set of basis functions, also described above. For example, the audio spectrum envelope is extracted by a sliding window FFT analysis, with a resampling to logarithmic spaced frequncy bands. In the preferred embodiment, the analysis frame period is 10ms. However, a sliding extraction window of 30ms duration is used with a Hamming window. The 30ms interval is chosen to provide enough spectral resolution to roughly resolve the 62.5 Hz-wide first channel of an octave-band spectrum. The size of the FFT analysis window is the next-larger power-of-two number of samples. This means for 30ms at 32kHz there are 960 samples but the FFT would be performed on 1024 samples, For 30ms at 44.1 KHz, there are 1323 samples but the FFT would be performed on 2048 samples with out-of-window samples set to 0.

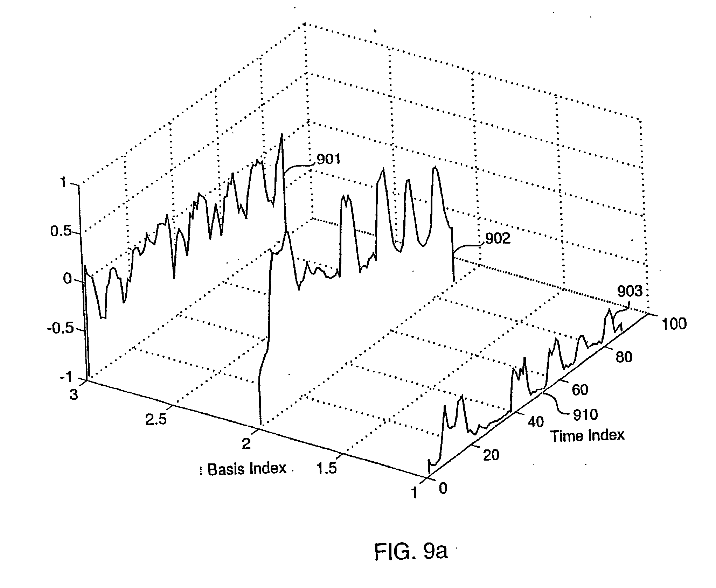

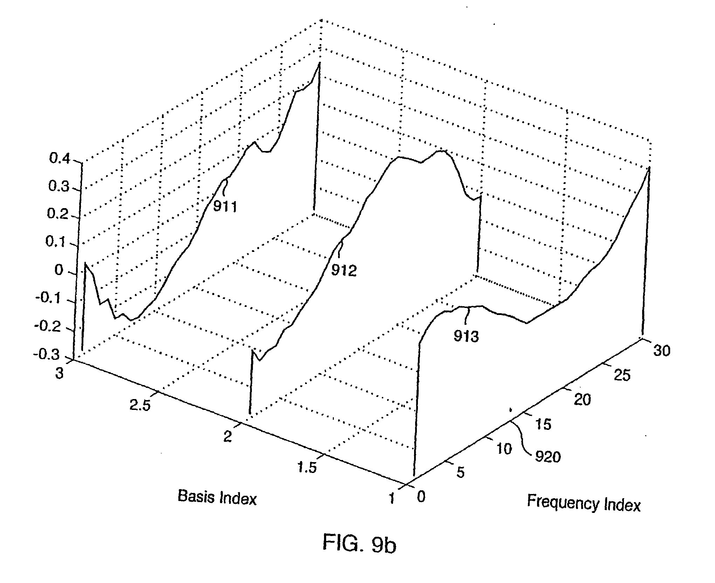

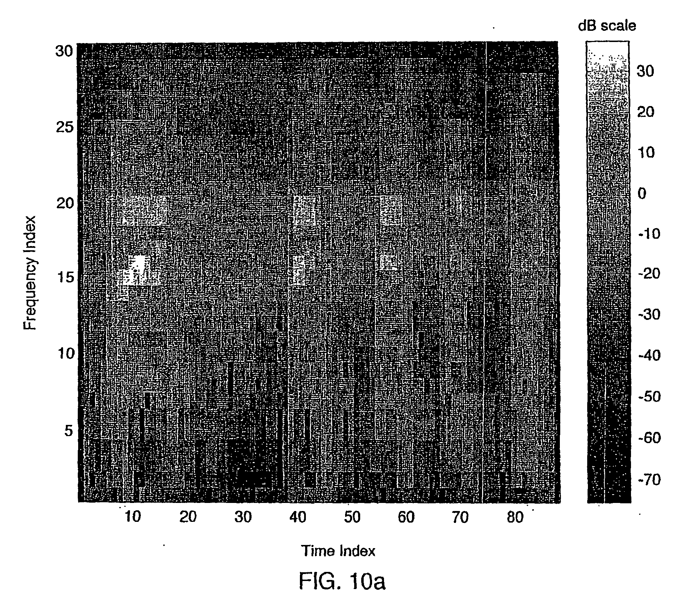

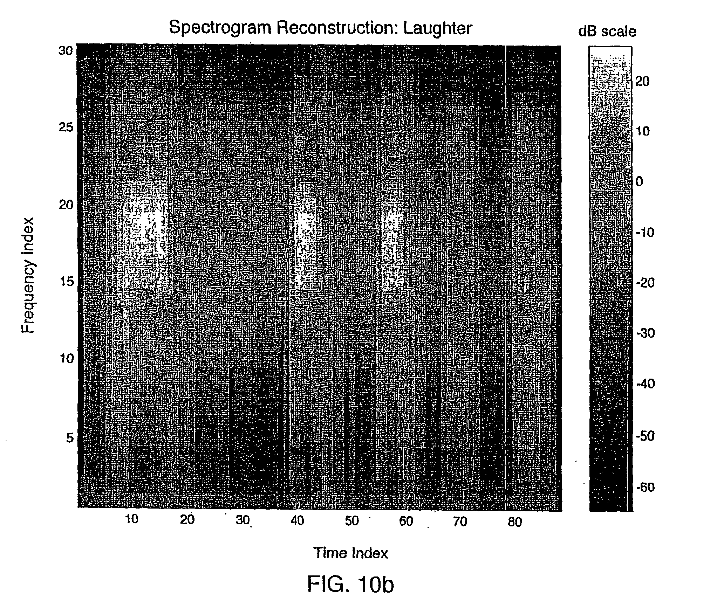

Figures 9a and 9b show three spectral basis components 901-903 for a time index 910, and the resulting basis projections 911-913 with a frequency index 920 for a "laughter" spectrogram 1000 in Figures 10a-b. The format here is similar to those shown in Figures 4 and 5. Figure 10a shows a log scale spectrogram of laughter, and Figure 10b a spectrogram reconstruction. Both figures plot the time and frequency indices on the x- and y-axes respectively.

In addition to the base descriptors, a large sequence of alternative quantitative descriptors can be used to define classifiers that use special properties of a sound class, such as the harmonic envelope and fundamental frequency features that are often used for musical instrument classification.

One convenience of dimension reduction as done by my invention, is that any descriptor based on a scalable series can be appended to spectral descriptors with the same sampling rate. In addition, a suitable basis can be computed for the entire set of extended features in the same manner as a basis based on the spectrum.

**Spectrogram Summarization with a Basis Function**

Another application for the sound recognition features description scheme according to the invention is efficient spectrogram representation. For spectrogram visualization and summarization purposes, the audio spectrum basis projection and the audio spectrum basis features can be used as a very efficient storage mechanism.

In order to reconstruct a spectrogram, we use Equation 2, described in detail below. Equation 2 constructs a two-dimensional spectrogram from the cross product of each basis function and its corresponding spectrogram basis projection, also as shown in Figure 8 as described above.

**Probability Model Description Schemes**

**Finite State Model**

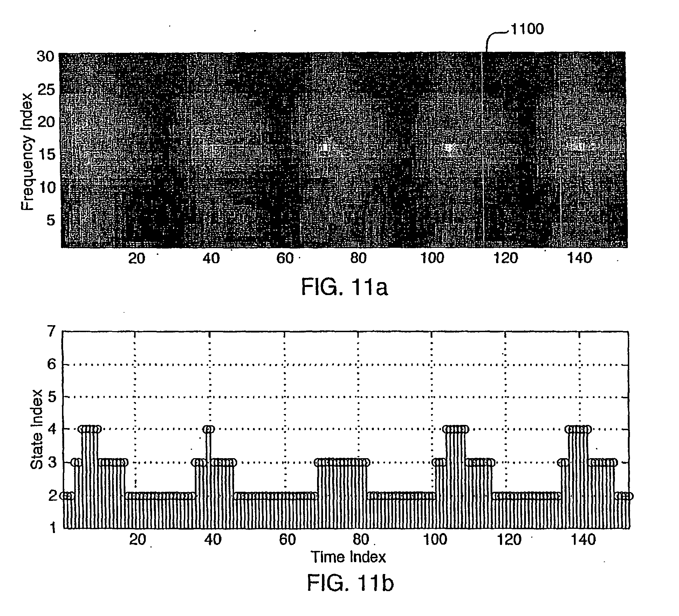

Sound phenomena are dynamic because spectral features vary over time. It is this very temporal variation that gives acoustic signals their characteristic "fingerprints" for recognition. Hence, my model partitions the acoustic signal generated by a particular source or sound class into a finite number of states. The partitioning is based on the spectral features. Individual sounds are described by their trajectories through this state space. This model is described in greater detail below with respect to Figures 11a-b. Each state can be represented by a continuous probability distribution such as a Gaussian distribution.

The dynamic behavior of a sound class through the state space is represented by a $k \times k$ transition matrix that describes the probability of transition to a next state given a current state. A transition matrix $T$ models the probability of transitioning from state $i$ at time $t-1$ to state $j$ at time $t$. An initial state distribution, which is a $k \times 1$ vector of probabilities, is also typically used in a finite-state model. The $k$th element in this vector is the probability of being in state $k$ in the first observation frame.

**Gaussian Distribution Type**

A multi-dimensional Gaussian distribution is used for modeling states during sound classification. Gaussian distributions are parameterized by a 1 x $n$ vector of means $m$, and an $n \times$ n covariance matrix, $K$, where $n$ is the number of features in each observation vector. The expression for computation of probabilities for a particular vector **x**, given the Gaussian parameters is:

$$f_{\mathbf{x}}(\mathbf{x}) = \frac{1}{(2\pi)^{\frac{n}{2}} |\mathbf{K}|^{\frac{1}{2}}} \exp\left[-\frac{1}{2}(\mathbf{x} - \mathbf{m})^T \mathbf{K}^{-1}(\mathbf{x} - \mathbf{m})\right].$$

A continuous hidden Markov model is a finite state model with a continuous probability distribution model for the state observation probabilities. The following DDL instantiation is an example of the use of probability model description schemes for representing a continuous hidden Markov model with Gaussian states. In this example, floating-point numbers have been rounded to two decimal places for display purposes only.

```
<ProbabilityModel xsi:type="ContinuousMarkovModelType" numberStates="7">
<Initial dim="7">
0.04  0.34  0.12  0.04  0.34  0.12  0.00 </Initial>
<Transitions dim="7 7">
0.91  0.02  0.00  0.00  0.05  0.01  0.01
0.01  0.99  0.00  0.00  0.00  0.00  0.00
0.01  0.00  0.92  0.01  0.01  0.06  0.00
0.00  0.00  0.00  0.99  0.01  0.00  0.00
0.02  0.00  0.00  0.00  0.97  0.00  0.00
0.00  0.00  0.01  0.00  0.00  0.98  0.01
0.02  0.00  0.00  0.00  0.00  0.02  0.96
</Transitions>
<State><Label>1</Label></State>
<!--State 1 Observation Distribution -- >
<ObservationDistribution xsi:type="GaussianDistributionType">
<Mean dim="6">
5.11 -9.28 -0.69 -0.79  0.38  0.47
</Mean>
<Covariance dim="6 6">
1.40 -0.12 -1.53 -0.72  0.09 -1.26
-0.12  0.19  0.02 -0.21  0.23  0.17
-1.53  0.02  2.44  1.41 -0.30  1.69
-0.72 -0.21  1.41  2.27 -0.15  1.05
0.09  0.23 -0.30 -0.15  0.80  0.29
-1.26  0.17  1.69  1.05  0.29  2.24
</Covariance>
<State><Label>2</Label></State>
<!--Remaining states use same structures-- >
<\PobabilityModel>
```

In this example, "ProbabilityModel" is instantiated as a Gaussian distribution type, which is derived from the base probability model class.

**Sound Recognition Model Description Schemes**

So far, I have isolated tools without any application structure. The following data types combine the above described descriptors and description schemes into a unified framework for sound classification and indexing. Sound segments can be indexed with a category label based on the output of a classifier. Additionally, the probability model parameters can be used for indexing sound in a database. Indexing by model parameters, such as states, is necessary for query-by-example applications when the query category is unknown, or when a narrower match criterion than the scope of a category is required.

**Sound Recognition Model**

A sound recognition model description scheme specifies a probability model of a sound class, such as a hidden Markov model or Gaussian mixture model. The following example is an instantiation of a hidden Markov model of the "Barks" sound category 611 of Figure 6. A probability model and associated basis functions for the sound class is defined in the same manner as for the previous examples.

```
<SoundRecognitionModel id="sfx1.1" SoundCategoryRef="Bark">
<ExtractionInformation term="Parameters" scheme="ExtractionParameters">
<Label>NumStates=7, NumBasisComponents=5</Label>
</ExtractionInformation>
<ProbabilityModel xsi:type="ContinuousMarkovModelType" numberStates="7">
      ... <!-- see previous example -->
</ProbabilityModel>
<SpectrumBasis loEdge="62.5" hiEdge="8000" resolution="1/4 octave">
      ... <!-- see previous example -->
</SpectrumBasis>
</SoundRecognitionModel>
```

**Sound Model State Path**

This descriptor refers to a finite-state probability model and describes the dynamic state path of a sound through the model. The sounds can be indexed in two ways, either by segmenting the sounds into model states, or by sampling of the state path at regular intervals. In the first case, each audio segment contains a reference to a state, and the duration of the segment indicates the duration of activation for the state. In the second case, the sound is described by a sampled series of indices that reference the model states. Sound categories with relatively long state-durations are efficiently described using the one-segment, one-state approach. Sounds with relatively short state durations are more efficiently described using the sampled series of state indices.

Figure 11a shows a log spectrogram (frequency v. time) 1100 of the dog-bark sound 611 of Figure 6. Figure 11b shows a sound model state path sequence of states through a continuous hidden Markov model for the bark model of Figure 11a, over the same time interval. In Figure 11b, the x-axis is the time index, and the y-axis the state index.

**Sound Recognition Classifier**

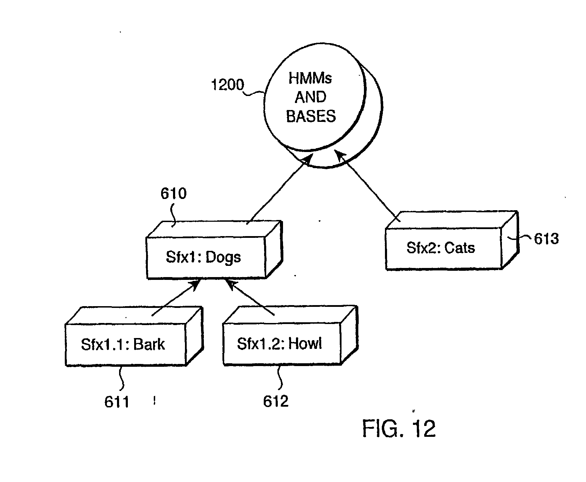

Figure 12 shows a sound recognition classifier that uses a single database 1200 for all the necessary components of the classifier. The sound recognition classifier describes relationships between a number of probability models thus defining an ontology of classifiers. For example, a hierarchical recognizer can classify broad sound classes, such as animals, at the root nodes and finer classes, such as dogs:bark and cats:meow, at leaf nodes as described for Figures 6 and 7. This scheme defines mapping between an ontology of classifiers and a taxonomy of sound categories using the graph's descriptor scheme structure to enable hierarchical sound models to be used for extracting category descriptions for a given taxonomy.

Figure 13 shows a system 1300 for building a database of models. The system shown in Figure 13 is an extension of the system shown in Figure 1. Here, the input acoustic signal is windowed before filtering to extract the spectrum envelope. The system can take audio input 1301 in the form of, e.g., WAV format audio files. The system extracts audio features from the files, and trains a hidden Markov model with these features. The system also uses a directory of sound examples for each sound class. The hierarchical directory structure defines an ontology that corresponds to a desired taxonomy. One hidden Markov model is trained for each of the directories in the ontology.

**Audio Feature Extraction**

The system 1300 of Figure 13 shows a method for extracting audio spectrum basis functions and features from an acoustic signal as described above. An input acoustic signal 1301 can either be generated by a single source, e.g., a human, or an animal, or a musical instrument, or a many sources, e.g., a human and an animal and multiple instruments, or even synthetic sounds. In the later case, the acoustic signal is a mixture. The input acoustic signal is first windowed 1310 into 10 ms frames. Note, in Figure 1 the input signal is band-pass filtered before windowing. Here, the acoustic signal is first windowed and than filtered 1320 to extract a short-time logarithmic-in-frequency spectrum. The filtering performs a time-frequency power spectrum analysis, such as a squared-magnitude short-time Fourier transform. The result is a matrix with $M$ frames and $N$ frequency bins. The spectral vectors $\mathbf{x}$, are the rows of this matrix.

Step 1330 performs log-scale normalization. Each spectral vector $\mathbf{x}$ is converted from the power spectrum to a decibel scale 1331 $z$ = 10 log $_{10}$ **(x).** Step 1332 determined the L2-norm of the vector elements

$$r = \sqrt{\sum_{k=1}^{N} z_k^2}$$

. The new unit-norm spectral vector is then determined the spectrum envelope $\tilde{x}$ by $z/r$, which divides each slice **z** by its power **r,** and the resulting normalized spectrum envelope $\tilde{x}$ 1340 is passed to the basis extraction process 1360.

The spectrum envelope $\tilde{x}$ places each vector row-wise in the form of an observation matrix. The size of the resulting matrix is $M \times N$ where $M$ is the number of time frames and $N$ is the number of frequency bins. The matrix will have the following structure:

$$\tilde{X} = \begin{bmatrix} \tilde{x}_1^T \\ \tilde{x}_2^T \\ \vdots \\ \vdots \\ \tilde{x}_M^T \end{bmatrix}$$

**Basis Extraction**

Basis functions are extracted using the singular value decomposition SVD 130 of Figure 1. The SVD is performed using the command [U, S, V] = SVD(X, 0). I prefer to use an "economy" SVD. An economy SVD omits unnecessary rows and columns during the factorization of the SVD. I do not need the row-basis functions, thus the extraction efficiency of the SVD is increased. The SVD factors the matrix as follows. $\tilde{x}$ = **USV**$^T$, where $\tilde{x}$ is factored into a matrix product of three matrices, the row basis **U**, the diagonal singular value matrix **S**, and the transposed column basis functions **V**. The basis is reduced by retaining only the first $K$ basis functions, i.e., the first $K$ columns of **V**:

$$V_K = [v_1 \ v_2 \ ... \ v_k],$$

where $K$ is typically in the range of 3-10 basis functions for sound feature-based applications. To determine the proportion of information retained for $K$ basis functions use the singular values contained in matrix **S**:

$$I(K) = \frac{\sum_{i=1}^{K} S(i,i)}{\sum_{j=1}^{N} S(j,j)},$$

where $I(K)$ is the proportion of information retained for $K$ basis functions, and $N$ is the total number of basis functions which is also equal to the number of spectral bins. The SVD basis functions are stored in the columns of the matrix.

For maximum compatibility between applications, the basis functions have columns with unit L2-norm, and the functions maximize the information in $k$ dimensions with respect to other possible basis functions. Basis functions can be orthogonal, as given by PCA extraction, or non-orthogonal as given by ICA extraction, see below. Basis projection and reconstruction are described by the following analysis-synthesis equations,

$$Y = XV \qquad (1)$$

and

$$X = YV^+ , \qquad (2)$$

where $\mathbf{X}$ is the spectrum envelope, $\mathbf{Y}$ are the spectral features, and $\mathbf{V}$ are the temporal features. The spectral features are extracted from the $m \times k$ observation matrix of features, $\mathbf{X}$ is the $m \times n$ spectrum data matrix with spectral vectors organized row wise, and $\mathbf{V}$ is a $n \times k$ matrix of basis functions arranged in the columns.

The first equation corresponds to feature extraction and the second equation corresponds to spectrum reconstruction, see Figure 8, where $\mathbf{V}^+$ denotes the pseudo inverse of $\mathbf{V}$ for the non-orthogonal case.

**Independent Component Analysis**

After the reduced SVD basis $\mathbf{V}$ has been extracted, an optional step can perform a basis rotation to directions of maximal statistical independence. This isolates independent components of a spectrogram, and is useful for any application that requires maximum separation of features. To find a statistically independent basis using the basis functions obtained above, any one of the well-known, widely published independent component analysis (ICA) processes can be used, for example, *JADE*, or *FastICA*, see Cardoso, J.F. and Laheld, B.H. "Equivariant adaptive source separation," *IEEE Trans. On Signal Processing*, 4:112-114, 1996, or Hyvarinen, A. "Fast and robust fixed-point algorithms for independent component analysis," *IEEE Trans. On Neural Networks*, 10(3):626-634, 1999.

The following use of ICA factors a set of vectors into statistically independent vectors $[\bar{\mathbf{V}}_k^T, \mathbf{A}] = \mathrm{ica}(\mathbf{V}^T{}_k)$, where the new basis is obtained as the product of the SVD input vectors and the pseudo-inverse of the estimated mixing matrix $\mathbf{A}$ given by the ICA process. The ICA basis is the same size as the SVD basis and is stored in the columns of the basis matrix. The retained information ratio, $I(K)$, is equivalent to the SVD when using the given extraction method. The basis functions $\bar{\mathbf{V}}_K$ 1361 can be stored in the data base 1200.

In the case where the input acoustic signal is a mixture generated from multiple sources, the set of features produced by the SVD can be clustered into groups using any known clustering technique having a dimensionality equal to the dimensionality of the features. This puts like features into the same group. Thus, each group includes features for the acoustic signal generate by a single source.

The number of groups to be used in the clustering can be set manually or automatically, depending on a desired level of discrimination desired.

**Use of Spectrum Subspace Basis Functions**

To obtain projection or temporal features $\mathbf{Y}$, the spectrum envelope matrix $\mathbf{X}$ is multiplied by the basis vectors of the spectral features $\mathbf{V}$. This step is the same for both for SVD and ICA basis functions, i.e., $\tilde{Y}_k = \tilde{X} \mathbf{V}_k$ where $\mathbf{Y}$ is a matrix consisting of the reduced dimension features after projection of the spectrum against the basis $\mathbf{V}$.

For independent spectrogram reconstruction and viewing, I extract the non-normalized spectrum projection by skipping the normalization step 1330 extraction, thus, $\mathbf{Y}_k = \mathbf{X}\bar{\mathbf{V}}_k$. Now, to reconstruct an independent spectrogram, $\mathbf{X}_k$ as shown in Figure 8, component use the individual vector pairs, corresponding to the Kth projection vector $\mathbf{y}_k$ and the inverted Kth basis vector $\mathbf{v}_k$ and apply the reconstruction equation $\mathbf{X}_k = \mathbf{y}_k\bar{\mathbf{V}}_k^+$ , where the "+" operator indicates the transpose for SVD basis functions, which are orthonormal, or the pseudo-inverse for ICA basis functions, which is non-orthogonal.

**Spectrogram Summarization by Independent Components**

One of the uses for these descriptors is to efficiently represent a spectrogram with much less data than a full spectrogram. Using an independent component basis, individual spectrogram reconstructions, e.g., as seen in Figure 8, generally correspond to source objects in the spectrogram.

**Model Acquisition and Training**

Much of the effort in designing a sound classifier is spent collecting and preparing training data. The range of sounds should reflect the scope of the sound category. For example, dog barks can include individual barks, multiple barks in succession, or many dogs barking at once. The model extraction process adapts to the scope of the data, thus a narrower range of examples produces a more specialized classifier.

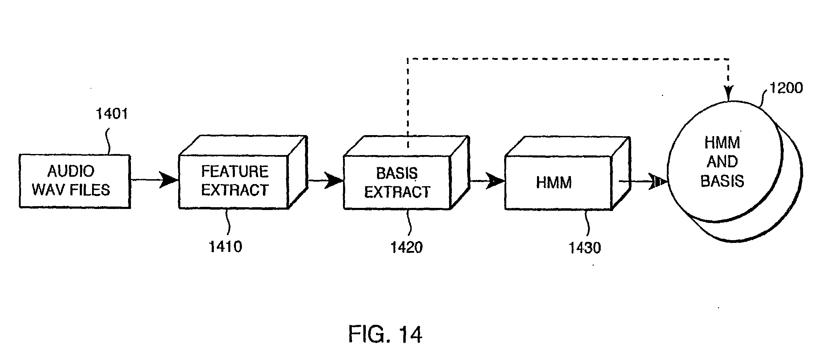

Figure 14 show a process 1400 for extracting features 1410 and basis function 1420, as described above, from acoustic signals generated by known sources 1401. These are then used to train 1440 hidden Markov models. The trained models are stored in the database 1200 along with their corresponding features. During training, an unsupervised clustering process is used to partition an $n$-dimensional feature space into $k$ states. The feature space is populated by reduced-dimension observation vectors. The process determines an optimal number of states for the given data by pruning a transition matrix given an initial guess for *k.* Typically, between five and ten states are sufficient for good classifier performance.

The hidden Markov models can be trained with a variant of the well-known Baum-Welch process, also known as Forward-Backward process. These processes are extended by use of an entropic prior and a deterministic annealing implementation of an expectation maximization (EM) process.

Details for a suitable HMM training process 1430 are described by Brand in *"Pattern discovery via entropy minimization*," In Proceedings, Uncertainty'99.

Society of Artificial intelligence and Statistics #7, Morgan Kaufmann, 1999, and Brand, *"Structure discovery in conditional probability models via an entropic prior and parameter extinction,"* Neural Computation, 1999.

After each HMM for each known source is trained, the model is saved in permanent storage 1200, along with its basis functions, i.e., the set of sound features. When a number of sound models have been trained, corresponding to an entire taxonomy of sound categories, the HMMs are collected together into a larger sound recognition classifier data structure thereby generating an ontology of models as shown in Figure 12. The ontology is used to index new sounds with qualitative and quantitative descriptors.

**Sound Description**

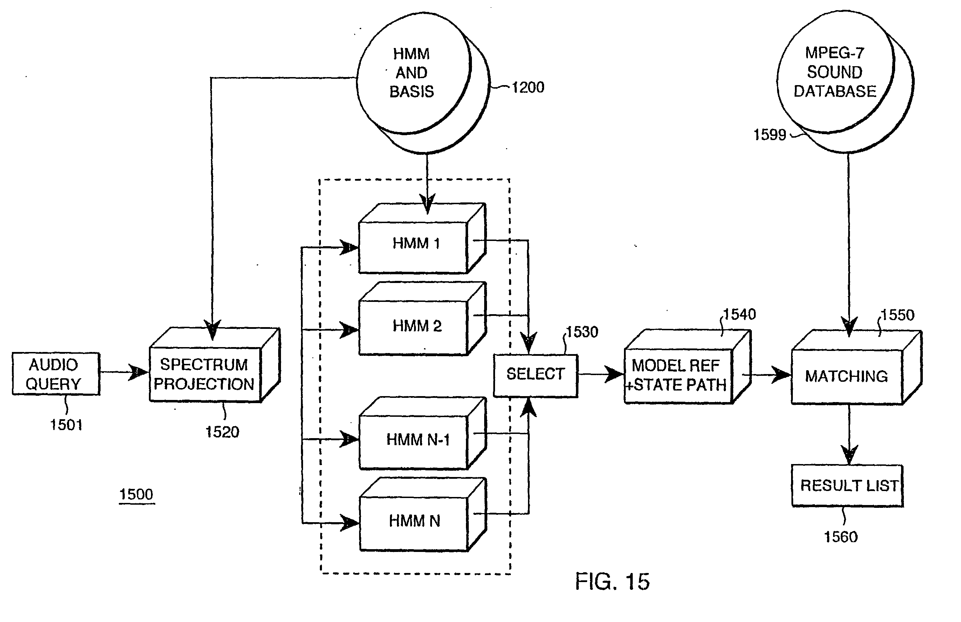

Figure 15 shows an automatic extraction system 1500 for indexing sound in a database using pre-trained classifiers saved as DDL files. An unknown sound is read from a media source format, such as a WAV file 1501. The unknown sound is spectrum projected 1520 as described above. The projection, that is, the set of features is then used to select 1530 one of the HMMs from the database 1200. A Viterbi decoder 1540 can be used to give both a best-fit model and a state path through the model for the unknown sound. That is, there is one model state for each windowed frame of the sound, see Figure 11b. Each sound is then indexed by its category, model reference and the model state path and the descriptors are written to a database in DDL format. The indexed database 1599 can then be searched to find matching sounds using any of the stored descriptors as described above, for example, all dog barkings. The substantially similar sounds can then be presented in a result list 1560.

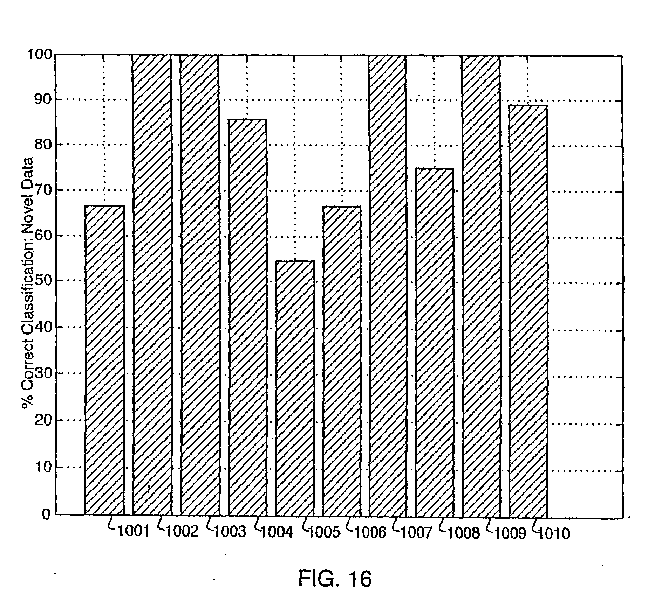

Figure 16 shows classification performance for ten sound classes 1601-1610, respectively: bird chirps, applause, dog barks, explosions, foot steps, glass breaking, gun shots, gym shoes, laughter, and telephones. Performance of the system was measured against a ground truth using the label of the source sound as specified by a professional sound-effect library. The results shown are for novel sounds not used during the training of the classifiers, and therefore demonstrate the generalization capabilities of the classifier. The average performance is about 95% correct.

**Example Search Applications**

The following sections give examples of how to use the description schemes to perform searches using both DDL-based queries and media source-format queries.

**Query by Example with DDL**

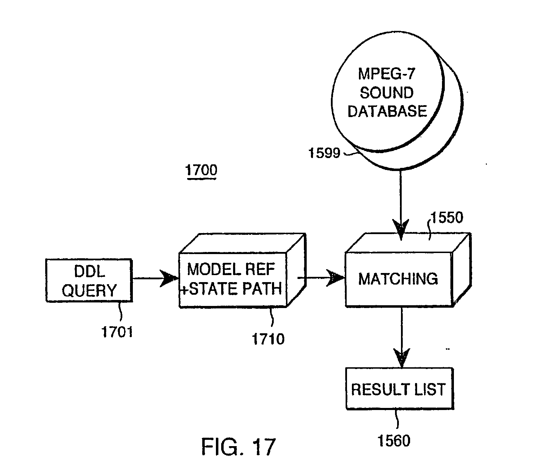

As shown in Figure 17 in simplified form, a sound query is presented to the system 1700 using the sound model state path description 1710 in DDL format. The system reads the query and populates internal data structures with the description information. This description is matched 1550 to descriptions taken from the sound database 1599 stored on disk. The sorted result list 1560 of closest matches is returned.

The matching step 1550 can use the sum of square errors (SSE) between state-path histograms. This matching procedure requires little computation and can be computed directly from the stored state-path descriptors.

State-path histograms are the total length of time a sound spends in each state divided by the total length of the sound, thus giving a discrete probability density function with the state index as the random variable. The SSE between the query sound histogram and that of each sound in the database is used as a distance metric. A distance of zero implies an identical match and increased non-zero distances are more dissimilar matches. This distance metric is used to rank the sounds in the database in order of similarity, then the desired number of matches is returned, with the closest match listed first.

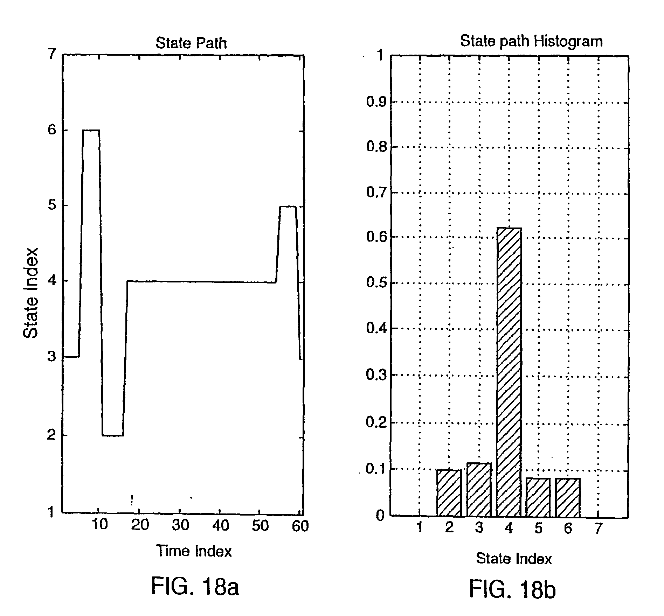

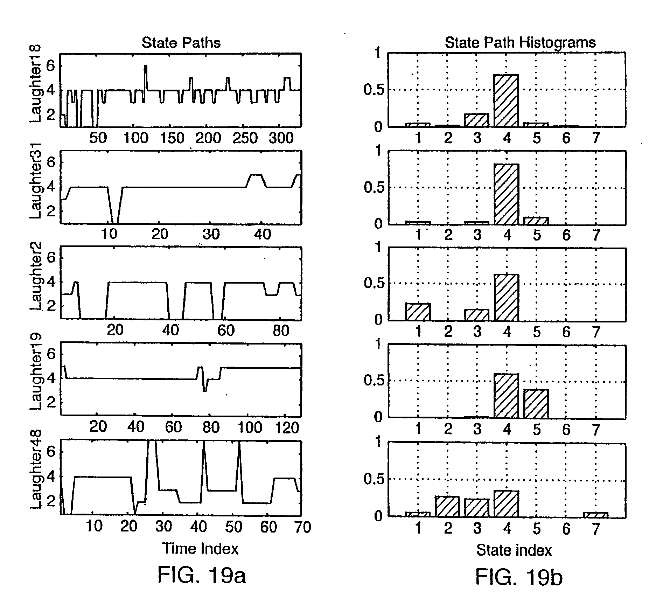

Figure 18a shows a state path, and Figure 18b a state path histogram for a laughter sound query. Figure 19a shows state paths and Figure 19b histograms for the five best matches to the query. All matches are from the same class as the query which indicates the success the correct performance of the system.

To leverage the structure of the ontology, sounds within equivalent or narrower categories, as defined by a taxonomy, are returned as matches. Thus, the 'Dogs' category will return sounds belonging to all categories related to 'Dogs' in a taxonomy.

**Query-by-Example with Audio**

The system can also perform a query with an audio signal as input. Here, the input to the query-by-example application is an audio query instead of a DDL description-based query. In this case, the audio feature extraction process is first performed, namely spectrogram and envelope extraction is followed by projection against a stored set of basis functions for each model in the classifier.

The resulting dimension-reduced features are passed to the Viterbi decoder for the given classifier, and the HMM with the maximum-likelihood score for the given features is selected. The Viterbi decoder essentially functions as a model-matching algorithm for the classification scheme. The model reference and state path are recorded and the results are matched against a pre-computed database as in the first example.

**Claims**

1. A method for extracting features from an acoustic signal (101) generated from a plurality of sources, comprising:

    windowing (120) and filtering (110) the acoustic signal (101) to produce a spectral envelope; reducing the dimensionality of the spectral envelope (130, 131) to produce a set of features; clustering the features in the set to produce a group of features for each of the plurality of sources, the features in each group including spectral features (108) and corresponding temporal features (109) **characterizing** each source, each group of features being a quantitative descriptor of each source;

    **characterized by**

    associating a qualitative descriptor with each quantitative descriptor to generate a category for each source; organizing the categories in a database (1599) as a taxonomy (600, 700) of classified sources; and relating each category with at least one other category in the database by a relational link (601) .

2. The method of claim 1 wherein the categories are stored in the database (1599) using a description definition language.

3. The method of claim 2 wherein a particular category in a DDL instantiation defines a basis projection matrix that reduces a series of logarithmic frequencies spectra of a particular source to fewer dimensions.

4. The method of claim 1 wherein the categories include environmental sounds, background noises, sound effects, sound textures, animal sounds, speech, non-speech utterances, and music.

5. The method of claim 1 further comprising: combining substantially similar categories in the database (1599) as a hierarchy of classes.

6. The method of claim 1 wherein a particular quantitative descriptor further includes a harmonic envelope descriptor, and fundamental frequency descriptor.

7. The method of claim 1 wherein the temporal features (109) describe a trajectory of the spectral features (108) over time, and further comprising:

    partitions the acoustic signal generated by a particular source into a finite number of states based on the corresponding spectral features (108) ;
    representing each state by a continuous probability distribution;
    representing the temporal features (109) by a transition matrix to model probabilities of transitions to a next state given a current state.

8. The method of claim 7 wherein the continuous probability distribution is a Gaussian distribution parameterized by a $1 \times n$ vector of means m, and an $n \times n$ covariance matrix K, where n is the number of spectral features (108) in each spectral envelope, and the probabilities of a particular spectral envelope x is given by:

$$f_x(x) = \frac{1}{2(\pi)^{\frac{n}{2}}|K|^{\frac{1}{2}}} \exp\left[-\frac{1}{2}(x-m)^T K^{-1}(x-m)\right]$$

**9.** The method of claim 1 wherein each source is known, and further comprising:

training, for each known source, a hidden Markov model (1200) with the set of features;
storing each trained hidden Markov model (1200) with the associated set of spectral features in a database.

**10.** The method of claim 1 wherein the set of acoustic signals belongs to a known category, and further comprising:

extracting a spectral basis for the acoustic signals;
training a hidden Markov model (1200) using the temporal features of the acoustic signals; storing each trained hidden Markov model with the associated spectral basis features.

**11.** The method of claim 9 further comprising:

generating an unknown acoustic form an unknown source;
windowing (120) and filtering (110) the unknown acoustic signal (101) to produce an unknown spectral envelope; reducing the dimensionality (130, 131) of the unknown spectral envelope to produce a set of unknown features, the set including unknown spectral features (108) and corresponding unknown temporal features (109) **characterizing** the unknown source;
selecting one of the stored hidden Markov models (1200) that best-fits the unknown set of features to identify the unknown source.

**12.** The method of claim 11 wherein a plurality of the stored hidden Markov models (1200) are selected to identify a plurality of known source substantially similar to the unknown source.

**Patentansprüche**

**1.** Verfahren zum Herausziehen von Merkmalen aus einem akustischen Signal (101), das aus mehreren Quellen erzeugt ist, welches aufweist:

Bilden eines Fensters (120) für das und Filtern (110) des akustischen Signals (101) um eine spektrale Umhüllung zu erzeugen;
Reduzieren der Dimensionalität der spektralen Umhüllung (130, 131), um einen Satz von Merkmalen zu erzeugen;
Zusammenballen der Merkmale in dem Satz, um eine Gruppe von Merkmalen für jede der mehreren Quellen zu erzeugen, wobei die Merkmale in jeder Gruppe spektrale Merkmale (108) und entsprechende zeitliche Merkmale (109), die jede Quelle charakterisieren, enthalten, und jede Gruppe von Merkmalen ein quantitativer Beschreibungssatz für jede Quelle ist;

**gekennzeichnet durch**

Assoziieren eines qualitativen Beschreibungssatzes mit jedem quantitativen Beschreibungssatz, um eine Kategorie für jede Quelle zu erzeugen; Organisieren der Kategorien in einer Datenbank (1599) als eine Systematik (600, 700) von klassifizierten Quellen; und Inbeziehungsetzen jeder Kategorie mit zumindest einer anderen Kategorie in der Datenbank **durch** eine beziehungsweise Verbindung (601).

**2.** Verfahren nach Anspruch 1, bei dem die Kategorien in der Datenbank (1599) unter Verwendung einer Beschreibungsdefinitionssprache gespeichert werden.

**3.** Verfahren nach Anspruch 2, bei dem eine besondere Kategorie in einer DDL-Beispielsdarstellung eine Basisprojektionsmatrix definiert, die eine Reihe von logarithmischen Frequenzspektren einer besonderen Quelle auf weniger Dimensionen reduziert.

4. Verfahren nach Anspruch 1, bei dem die Kategorien Umwelttöne, Hintergrundrauschen, Toneffekte, Tonstrukturen, tierische Töne, Sprache, nichtsprachliche Außerungen und Musik enthalten.

5. Verfahren nach Anspruch 1, welches weiterhin aufweist:

   Kombinieren im Wesentlichen ähnlicher Kategorien in der Datenbank (1599) als Hierarchie von Klassen.

6. Verfahren nach Anspruch 1, bei dem ein besonderer quantitativer Beschreibungssatz weiterhin einen Beschreibungssatz für eine harmonische Umhüllung und einen Beschreibungssatz für eine Grundfrequenz enthält.

7. Verfahren nach Anspruch 1, bei dem die zeitlichen Merkmale (109) eine Trajektorie der Spektralmerkmale (108) über die Zeit beschreiben, und das weiterhin aufweist:

   Teilen des durch eine besondere Quelle erzeugten akustischen Signals in eine endliche Anzahl von Zuständen auf der Grundlage der entsprechenden Spektralmerkmale (108);
   Darstellen jedes Zustands durch eine kontinuierliche Wahrscheinlichkeitsverteilung;
   Darstellen der zeitlichen Merkmale (109) durch eine Übergangsmatrix, um Wahrscheinlichkeiten von Übergängen zu einem nächsten Zustand in Anbetracht eines gegenwärtigen Zustands zu modellieren.

8. Verfahren nach Anspruch 7, bei dem die kontinuierliche Wahrscheinlichkeitsverteilung eine Gaußsche Verteilung ist, die parameterisiert ist durch einen 1xn-Vektor von Mitteln m, und eine nxn-Kovarianzmatrix K, wobei n die Anzahl von Spektralmerkmalen (108) in jeder spektralen Umhüllung ist und die Wahrscheinlichkeiten einer besonderen spektralen Umhüllung x gegeben sind durch:

$$f_x(x) = \frac{1}{2(\pi)^{\frac{n}{2}}|K|^{\frac{1}{2}}} \exp\left[-\frac{1}{2}(x-m)^T(x-m)\right]$$

9. Verfahren nach Anspruch 1, bei dem jede Quelle bekannt ist, und das weiterhin aufweist:

   Trainieren eines versteckten Markov-Modells (1200) für jede bekannte Quelle mit dem Satz von Merkmalen;
   Speichern jedes trainierten versteckten Markov-Modells (1200) mit dem assoziierten Satz von Spektralmerkmalen in einer Datenbank.

10. Verfahren nach Anspruch 1, bei dem der Satz von akustischen Signalen zu einer bekannten Kategorie gehört, und das weiterhin aufweist:

   Herausziehen einer Spektralbasis für die akustischen Signale;
   Trainieren eines versteckten Markov-Modells (1200) unter Verwendung der zeitlichen Merkmale der akustischen Signale;
   Speichern jedes trainierten versteckten Markov-Modells mit den assoziierten spektralen Basismerkmalen.

11. Verfahren nach Anspruch 9, welches weiterhin aufweist:

   Erzeugen eines unbekannten akustischen Signals von einer unbekannten Quelle;
   Bilden eines Fensters (120) für das und Filtern (110) des unbekannten akustischen Signals (101), um eine unbekannte spektrale Umhüllung zu erzeugen;
   Reduzieren der Dimensionalität (130, 131) der unbekannten spektralen Umhüllung, um einen Satz von unbekannten Merkmalen zu erzeugen, wobei der Satz unbekannte Spektralmerkmale (108) und entsprechende unbekannte zeitliche Merkmale (109), die die unbekannte Quelle charakterisieren, enthält;
   Auswählen eines der gespeicherten versteckten Markov-Modelle (1200), das dem unbekannten Satz von Merkmalen am besten angepasst ist, um die unbekannte Quelle zu identifizieren.

12. Verfahren nach Anspruch 11, bei dem mehrere der gespeicherten versteckten Markov-Modelle (1200) ausgewählt werden, um mehrere bekannte Quellen zu identifizieren, die im Wesentlichen der unbekannten Quelle ähnlich sind.

## EP 1 260 968 B1

**Revendications**

1. Procédé pour extraire des caractéristiques d'un signal acoustique (101) généré par une pluralité de sources, comprenant :

   le fenêtrage (120) et le filtrage (110) du signal acoustique (101) pour produire une enveloppe spectrale; la réduction de la dimensionnalité de l'enveloppe spectrale (130, 131) pour produire un ensemble de caractéristiques;
   le regroupement des caractéristiques de l'ensemble pour produire un groupe de caractéristiques pour chaque source de la pluralité de sources, les caractéristiques de chaque groupe comprenant des caractéristiques spectrales (108) et des caractéristiques temporelles correspondantes (109) caractérisant chaque source, chaque groupe de caractéristiques étant un descripteur quantitatif de chaque source;

   **caractérisé par**

   l'association d'un descripteur qualitatif avec chaque descripteur quantitatif pour générer une catégorie pour chaque source;
   l'organisation des catégories dans une base de données (1599) sous la forme d'une taxinomie (600, 700) de sources classées; et
   la mise en rapport de chaque catégorie avec au moins une autre catégorie de la base de données par une liaison relationnelle (601).

2. Procédé selon la revendication 1, dans lequel les catégories sont stockées dans la base de données (1599) en utilisant un langage de définition de description.

3. Procédé selon la revendication 2, dans lequel une catégorie particulière dans une instanciation DDL définit une matrice de projection de base qui réduit une série de spectres de fréquences logarithmiques d'une source particulière à de moindres dimensions.

4. Procédé selon la revendication 1, dans lequel les catégories comprennent des sons environnementaux, des bruits de fond, des effets sonores, des textures sonores, des sons d'animaux, des sons vocaux, des émissions non vocales et de la musique.

5. Procédé selon la revendication 1, comprenant en outre la combinaison de catégories sensiblement similaires de la base de données (1599) sous la forme d'une hiérarchie de classes.

6. Procédé selon la revendication 1, dans lequel un descripteur quantitatif particulier comprend en outre un descripteur d'enveloppe harmonique et un descripteur de fréquence fondamentale.

7. Procédé selon la revendication 1, dans lequel les caractéristiques temporaires (109) décrivent une trajectoire des caractéristiques spectrales (108) au fil du temps, et comprenant en outre :

   le cloisonnement du signal acoustique généré par une source particulière en un nombre fini d'états basés sur les caractéristiques spectrales correspondantes (108);
   la représentation de chaque état par une distribution de probabilité continue; et
   la représentation des caractéristiques temporelles (109) par une matrice de transition pour modéliser les probabilités de transitions à un état suivant étant donné un état courant.

8. Procédé selon la revendication 7, dans lequel la distribution de probabilité continue est une distribution gaussienne paramétrée par un vecteur 1 x n de moyennes un et une matrice de covariance n x n K, où n est le nombre de caractéristiques spectrales (108) dans chaque enveloppe spectrale et les probabilités d'une enveloppe spectrale particulière x sont données par :

$$f_{\dot{x}}(x) = \frac{1}{2(\pi)^{\frac{n}{2}}|K|^{\frac{1}{2}}} \exp\left[-\frac{1}{2}(x-m)^T K^{-1}(x-m)\right]$$

**9.** Procédé selon la revendication 1, dans lequel chaque source est connue, et comprenant en outre :

    la formation, pour chaque source connue, d'un modèle de Markov caché (1200) avec l'ensemble de caractéristiques; et
    le stockage de chaque modèle de Markov caché (1200) avec l'ensemble associé de caractéristiques spectrales dans une base de données.

**10.** Procédé selon la revendication 1, dans lequel l'ensemble de signaux acoustiques appartient à une catégorie connue, et comprenant en outre :

    l'extraction d'une base spectrale pour les signaux acoustiques;
    la formation d'un modèle de Markov caché (1200) en utilisant les caractéristiques temporaires des signaux acoustiques; et
    le stockage de chaque modèle de Markov caché formé avec les caractéristiques de base spectrales associées.

**11.** Procédé selon la revendication 9, comprenant en outre la génération d'un signal acoustique inconnu à partir d'une source inconnue;

    le fenêtrage (120) et le filtrage (110) du signal acoustique inconnu (101) pour produire une enveloppe spectrale inconnue;
    la réduction de la dimensionnalité (130, 131) de l'enveloppe spectrale inconnue pour produire un ensemble de caractéristiques inconnues, l'ensemble comprenant des caractéristiques spectrales inconnues (108) et des caractéristiques temporaires inconnues correspondantes (109) caractérisant la source inconnue; et
    le choix d'un des modèles de Markov cachés stockés (1200) qui s'ajuste le mieux à l'ensemble inconnu de caractéristiques pour identifier la source inconnue.

**12.** Procédé selon la revendication 11, dans lequel une pluralité de modèles de Markov cachés stockés (1200) sont choisis pour identifier une pluralité de sources connues sensiblement similaires aux sources inconnues.

100

Audio Mixture
101

FILTER BANK
110

Band-Pass Signal
111

WINDOW
120

Observation matrices
121

SVD
130

Reduced dimensionality matrices
131

ICA
140

temporal features
109

spectral features
108

FIG. 1

EP 1 260 968 B1

FIG. 2

$$\left\{ \sum_{i-1}^{P} X_i + \sum_{j-1}^{X} Y_j \right\}$$

FIG. 3

FIG. 4

FIG. 5

FIG. 6

FIG. 7

EP 1 260 968 B1

FIG. 8

Basis Projection — 802
Spectral Basis — 801
Frequency
Time

800

EP 1 260 968 B1

EP 1 260 968 B1

FIG. 9a

FIG. 9b

FIG. 10a

Spectrogram Reconstruction: Laughter

FIG. 10b

FIG. 11a

FIG. 11b

FIG. 12

FIG. 13

1300

FIG. 14

FIG. 15

EP 1 260 968 B1

FIG. 16

EP 1 260 968 B1

FIG. 17

FIG. 18a

FIG. 18b

State Path Histograms

State index

FIG. 19b

State Paths

Time Index

FIG. 19a